Europäisches Patentamt

European Patent Office

Office européen des brevets

(11) Publication number: **0 184 211**
**B1**

(12) EUROPEAN PATENT SPECIFICATION

(45) Date of publication of patent specification: **19.09.90**

(21) Application number: **85115488.0**

(22) Date of filing: **05.12.85**

(51) Int. Cl.⁵: **B 29 C 45/34, B 29 C 45/43, B 29 C 45/17**

(54) Evacuation system for injection molding machine.

(30) Priority: **06.12.84 US 679053**

(43) Date of publication of application:
**11.06.86 Bulletin 86/24**

(45) Publication of the grant of the patent:
**19.09.90 Bulletin 90/38**

(84) Designated Contracting States:
**DE GB IT NL**

(56) References cited:
**DE-A-1 779 104
US-A-2 452 382
US-A-3 813 201**

(73) Proprietor: **Alpha Molding Technologies
Associates
4 New Town Road
Danbury Connecticut 06810 (US)**

(72) Inventor: **Smith, Lyle
4 New Town Road
Danbury Connecticut 06810 (US)**

(74) Representative: **Heusler, Wolfgang, Dipl.-Ing.
et al
Dr. Dieter von Bezold Dipl.-Ing. Peter Schütz
Dipl.-Ing. Wolfgang Heusler Brienner Strasse 52
D-8000 München 2 (DE)**

Courier Press, Leamington Spa, England.

## Description

### Field of the Invention

The present invention relates to an apparatus for and a method of controlling operating pressure within a mold cavity according to the preambles of claims 1 and 9. Such an apparatus and such a method are known from DE-A-1779 104.

Injection molding in an injection molding machine is presently one of the most commonly used ways of rapidly fabricating complex plastic parts in large quantity. There is an increasing need to produce plastic parts with greater tolerance control and better quality at increased production rates. Consequently, it is essential to minimize potential loss of parts in the molding process due to gas burns and imperfect surface detail. There is also an increasing need to mold complex, intricately detailed parts having critical tolerances for medical and electronic applications. For example, in the medical field maintaining critical tolerances with no imperfections is essential for certain highly detailed thin-walled parts.

The present invention has been developed to provide such intricate parts through application of a process and apparatus which eliminates blemishes, gas burns, voids and other imperfections. The apparatus of the invention virtually eliminates reject parts through a novel process which provides controlled levels of vacuum and positive air pressure in the mold cavity for predetermined portions of the mold cycle.

### Description of the Prior Art

The general idea of applying a vacuum to a mold cavity is not new. U.S. Patent No. 4,412,804 to Huther discloses a vacuum source connected to the mold cavity of an injection molding die employed for forming ceramic parts. This patent utilizes a vacuum source having a volume 100 to 1000 times greater than the volume of the mold, with a closed-circuit evacuating system. The purpose is to remove air bubbles normally present in the molten ceramic material. While this technique reaches toward the production of improved ceramic parts, the patent does not disclose how to maintain the mold clean or how to prevent distortion of the parts during ejection from the mold. Further, the patent does not disclose how to provide high production runs of highly intricate and thin walled parts.

Further, DE-A-1 779 104 discloses a method and an apparatus for producing rubber and plastic parts using mating male and female die members which are actuated reciprocally between closed and open conditions, heated plastic or rubber material being injected into a mold cavity between the die members when the die is closed and a molded part removed from the die cavity when the die is open. The apparatus includes a vent path extending through one die member into communication with the mold cavity. In a first time interval after closing the die members, before and during injecting the material into the molding die, the vent path is connected to a vacuum pressure. During a second time interval, after opening the die members, the vent path is connected to a positive pressure for a short time for ejecting the molded part from the die members.

It is an object of the present invention to reduce the actual mold opening time and to speed up the molding cycle.

It is another object of the invention to provide pressure to the mold cavity to effect an incremental and uniform separation of the molded parts from the die to add in ejection of the parts, to minimize distortion during ejection, and to clean the mold cavity.

### Summary of the Invention

The invention provides an apparatus and a method of controlling operating pressure within a mold cavity in producing intricate and thin-walled plastic parts in the molding die of a cyclical injection molding machine, the molding die including mating male and female die members actuated reciprocally between closed and open conditions in a predetermined mold cycle, with heated plastic material injected into at least one mold cavity formed between the die members when the die is closed and a molded part removed from the die cavity when the die is open. The apparatus comprises sealing means affording an airtight seal between the mating male and female die members when the molding die is closed and a vent path extending through one die member into communication with the mold cavity. Vacuum pressure control means is connected to the vent path, for establishing and maintaining a substantially constant negative pressure in the mold cavity during a first time interval in each mold cycle beginning after the molding die has closed and before the mold cavity is filled with plastic material. Positive pressure control means is also connected to the vent path, for applying a positive air pressure to the mold cavity during a second time interval in each mold cycle, subsequent to the first time interval, to effect a uniform incremental separation of a molded part from the one die member. Reset means are provided for resetting the vacuum pressure control means and the positive pressure control means following each second time interval.

According to the present invention, the second time interval of applying positive air pressure begins after the first time interval and ends before the molding die is completely open, to effect a uniform incremental separation of a molded part from the one die member. Further, means are provided for resetting the vacuum pressure control means and the positive pressure control means following each second time interval.

In the present invention, the positive pressure tends to push the molded part away from the one die member and toward the other so that the molded part is consistently located on one of the two die members. Thus, the molded parts are always in position to be picked up rapidly once the die opens to speed up the molding cycle. By ending the application of positive pressure before the die is open, it is possible to avoid blowing the molded part out of the mold. With many parts, this would be the inevitable result of applicating the positive pressure after opening the molding die as it is performed according the prior art. Thus, according to the present invention the advantage of pushing the molded part toward one die member is fully realized only if the positive pressure is shut off before the molding die is completely open.

Brief Description of the Drawings

Fig. 1 is an end elevation view of an injection molding machine which incorporates the present invention;

Fig. 2 is a sectional elevation view taken approximately along line 2-2 in Fig. 1, illustrating components of the injection molding machine associated with the control apparatus of the present invention;

Fig. 3 is a timing chart relating the invention to the mold cycle of the injection molding machine of Fig. 2;

Fig. 4 is a front view of a control apparatus from Fig. 2, on an enlarged scale;

Fig. 5 is a detail elevation view, on an enlarged scale, taken approximately along line 5-5 in Fig. 1, illustrating the die members in fully separated position;

Fig. 6 is a detail elevation view of the female die member taken approximately along line 6-6 in Fig. 5;

Fig. 7 is a detail sectional view of the injection molding die taken approximately along line 7-7 in Fig. 6, with the die closed;

Fig. 8 is a sectional view, like Fig. 7, showing an alternate embodiment of an injection molding die;

Fig. 9 is a sectional view, like Fig. 7, showing a another alternate embodiment of an injection molding die;

Fig. 10 is a schematic diagram of a pneumatic pressure control apparatus for the invention; and

Fig. 11 is an electrical schematic for the pressure control apparatus.

Description of the Preferred Embodiments

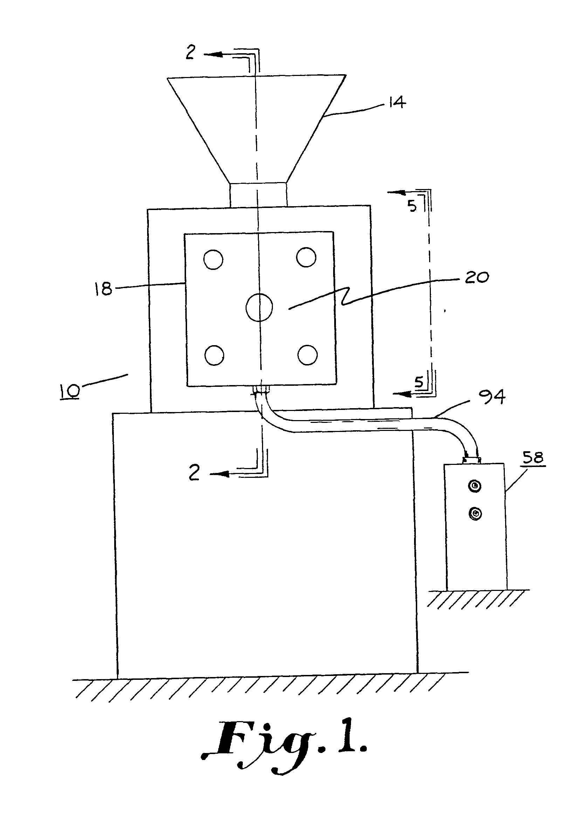

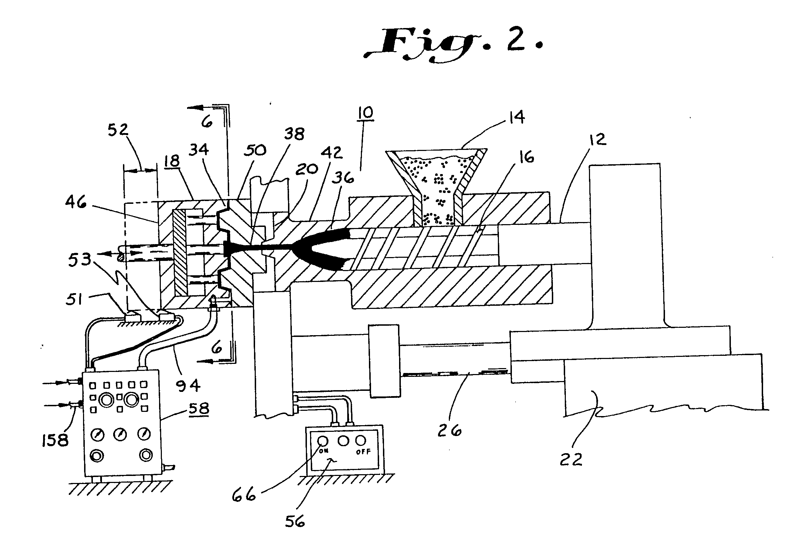

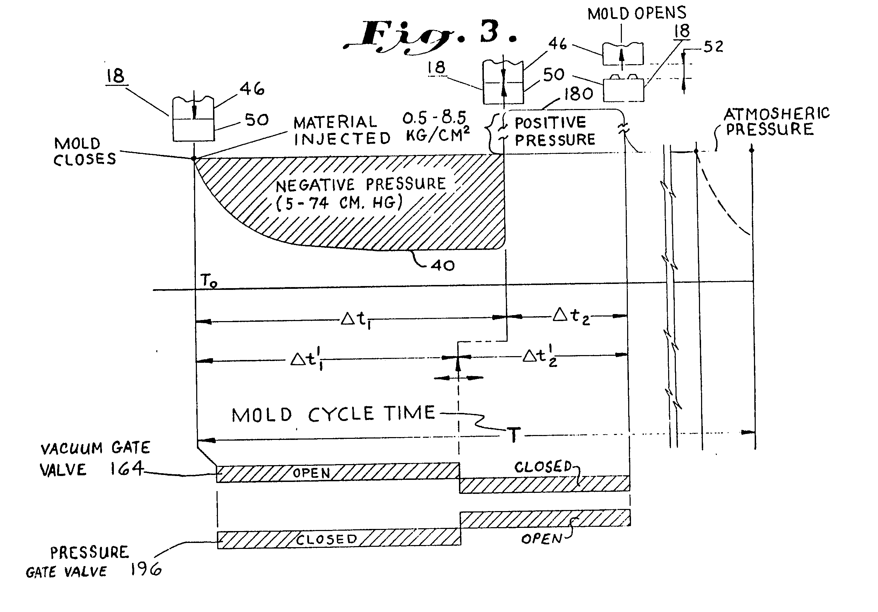

Figs. 1 and 2 show an injection molding machine 10 having a supply hopper 14 for holding a supply of pelletized plastic material such as polypropylene. Machine 10 includes a pump 12 which advances the plastic, by rotation of an injection screw 16, toward a molding die 18 located at one end 20 of the machine. Die 18 is cyclically operated by a drive comprising a control device 22, generally represented in Fig. 2, which controls a hydraulic pull-in cylinder 26. Cylinder 26 functions to open and close die 18, during a mold cycle shown in Fig. 3; in each mold cycle heated plastic is injected into die 18 to form plastic parts.

Die 18 has two principal major components, a female die member 46 and a male die member 50, which fit closely together when closed to provide a multi-cavity mold cavity 34 therebetween. Die member 50 has an inlet port 38 through which the plastic passes into mold cavity 34, advanced by the injector screw 16. Typically, a heating cylinder 42 is provided in molding machine 20, located in an area 36 in close proximity to the inlet port 38. The plastic is heated to a temperature determined by the manufacturer's recommendations; for example, polypropylene is usually heated to a temperature ranging from 150°C to 425°C by heater 42 as it is pushed into inlet port 38 by screw 16.

The principal components of the injection molding die 18, as previously mentioned, are the female die member 46 and the male die member 50. These components fit closely together, when closed as shown in Fig. 2, being closed under control of device 22 to a condition where flat mating surfaces of the die members, normal to the direction of die movement, seat and seal against each other during each mold cycle. In each mold cycle the male and female die members close, cavity 34 is filled, and die 18 subsequently opens to eject the plastic molded parts.

Control apparatus 22, which is connected electrically and pneumatically to machine 10, controls the setting up, starting, and stopping of the mold cycle according to predetermined requirements governed by the plastic material, the manufacturer's recommendations, the size of the molded parts, the size of the mold cavity, and like factors. Control device 22 has individual adjustable devices (not shown) for setting a distance 52 (Fig. 2) through which the female die member 46 moves reciprocally when die 18 is opened to eject the molded parts. Two limit switches 51 and 53 are actuated by die member 46 at its extreme positions corresponding to the extremes of movement of pull-in cylinder 26 as controlled by device 22; thus, limit switches 51 and 53 signal arrival of the die member 46 at its open and closed limiting positions during each mold cycle.

Fig. 3 is a timing chart representative of the mold cycle; in Fig. 3 time T represents the overall mold cycle time, during which one or more individual plastic parts are produced. At a time $T_0$, the molding die 18 is closed by operation of control apparatus 22, activated on startup by a switch 66 located on a control panel 56 associated with machine 10; see Fig. 2. In each mold cycle, immediately after time $T_0$, heated thermoplastic material is injected into mold cavity 34. Simultaneously, a vacuum is applied to mold cavity 34 (see portion 40 of Fig. 3) and maintained for a predetermined time interval $\triangle t_1$. The amount of vacuum applied will vary according to the mold cavity size and the particular material being molded. Plastic materials which have been used with the process of the invention with highly successful results include polyethysulphone and polypropylene. These materials are shot into mold cavity 34 under pressures of 350 to 3500 Kg/sq. cm. in a temperature range from 150°C to 425°C. The negative pressure in mold cavity 34 can be varied from −5 cm. Hg to −74 cm. Hg (centimeters of mercury) below atmospheric in order to evacuate the mold cavity. The time $\triangle t_1$ that the vacuum is applied may vary from 0.1 to 10 seconds. Depending upon the material, the size of the mold, and the fineness or thinness of the parts being molded, longer or shorter times may be more appropriate. There is a period during the $\triangle t_1$ time span when the vacuum is held at a constant level, just before a positive pressure is applied to mold cavity 34. Then there is a second time interval $\triangle t_2$ when the mold is charged with a positive pressure, at a pressure range varying from 0.5 to 8.5 Kg/sq. cm., the second time interval being during a time extending nominally from 0.1 to 10 seconds, depending on the material. Correlation of the positive pressure with the mold opening is important because the positive pressure causes the molded parts incrementally and uniformly to separate or eject from the surfaces of mold cavity 34. Moreover, the positive pressure causes mold cavity 34 to be cleaned effectively during a cleaning phase, prior to beginning the next mold cycle. The positive pressure is preferably supplied from a compressed air source.

The plastic parts manufactured by use of the present invention are typically quite critical with respect to wall thickness and tolerances. Thus, the parts molded with the present process may have details ranging in size from 0.0005 cm. to 0.025 cm. and hence are very sensitive to state of the art molding techniques where gas burns, voids and blemishes are common. It has heretofore been difficult to produce high volumes of such parts consistently with such critical tolerances.

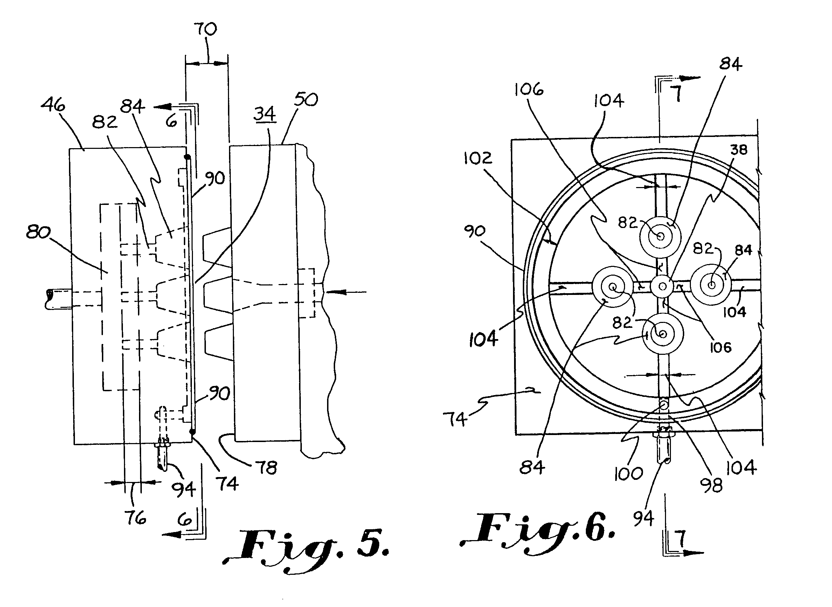

Fig. 5 shows injection molding die 18 with the female die member 46 in its open position displaced from the male die member 50 so that there is a gap 70 between the facing surfaces 74 and 78 of die members 46 and 50, respectively. Die 18 is a multi-cavity mold for forming four individual parts, in this instance simple cups having very thin walls. Die 18 includes an ejector pin apparatus 80 which is activated to move through a gap 76 in the latter part of the mold cycle by apparatus associated with control device 22 and cylinder 26. Apparatus 80 includes four pins 82 each aligned with an individual mold cavity 84; each pin 82 engages a part molded in its cavity 84 when die member 46 opens to positively eject that part as apparatus 80 moves through a predetermined reciprocal cycle.

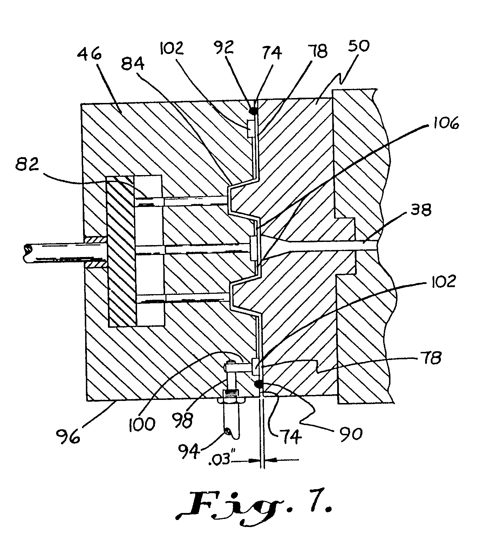

When the female and male die members 46 and 50 are closed face 78 of male die 50 is engaged by face 74 of female die 46, as best seen in Fig. 7. An "O" ring 90, which may be a 0.32 cm "O" ring of suitable material such as "VYTON" is firmly implanted in an annular groove 92 in surface 74 of female die 46 to a sufficient depth such that a minor amount of the "O" ring (about 0.76 cm) protrudes above face 74. Groove 92 may be reversed such that the "O" ring 90 is implanted in surface 78 of male die 50. Either way, the effect is to resiliently seal the cooperating die members during the actual molding process. Instead of "O" ring 90, a coating of RTV silicone, vacuum grease or the like may be used, so long as a positive seal is provided; the "O" ring, as described, however, provides a more durable seal. Considering the portability of control apparatus 58 "O" ring 90 will be noted as being readily adaptable to injection molding dies already in use.

Fig. 7 shows a pneumatic supply line 94 which is securely attached to die member 46 through a suitable commercial fitting into a side wall 96 of the female die. An elongated bore 98 connects supply line 94 coupling to another bore 100 extending normal to bore 98; the other end of bore 100 is centered within an annular vent groove 102 cut into face 74 of die 46 (Figs. 6 and 7). Vent groove 102 is located just inside "O" ring 90. Vent groove 102 has an appropriate width and depth, with other vent elements as described hereinafter, to allow air and gases to be exhaused rapidly from die 18. The locations of the vents are dependent on the number of parts cavities within the mold, and are located for effective venting of the mold prior to and during injection of the plastic molding material. Additional shallower vent grooves 104, Fig. 6, which may have a depth of 0.0013 cm to 0.013 cm, are also cut into face 74 of female die 46 such that a groove 104 intercepts each female mold cavity 84 and vent groove 102. Grooves 102 and 104 provide an access way for evacuation of air and gases as well as a pathway for applying positive air pressure as previously discussed. To allow the plastic material to enter each mold cavity 84, there is a sprueway 106 from inlet port 38 to each mold cavity 84.

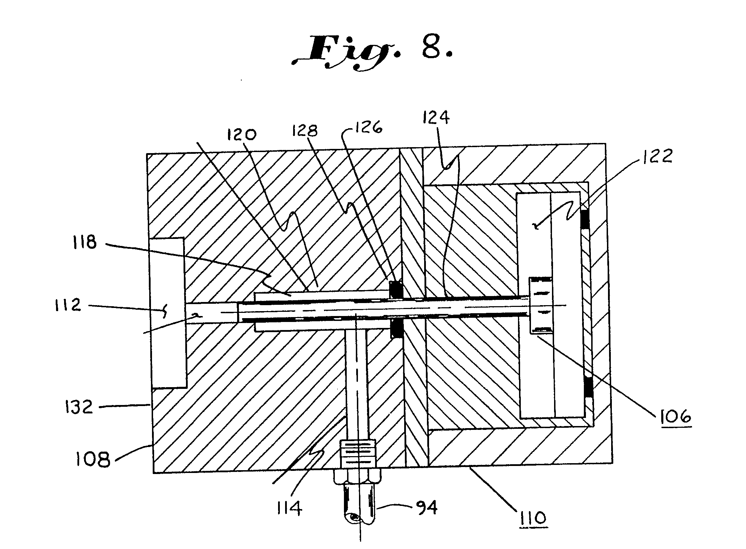

Fig. 8 shows a deep section ejector pin assembly 107 installed in a female die member 108 of an injection molding die 110. The operation of the injection molding die 110 is the same as that described for the injection molding die 18, except it includes only a single mold cavity 112 and a vent that enters the female die member 108 through a bore 114. Vacuum and pressure are applied to female die 108 through pneumatic supply line 94 connected to bore 114; bore 114 connects to another vent bore 118 in the center portion 120 of the female die member 108. Vent bore 118 is concentrically aligned with an ejector pin holding member 122, which provides a guideway for an ejector pin 124; both are part of an ejector assembly 106. An "O" ring 126 or other suitable seal is located at a section 128 of female die 108 such that vacuum line 94 and mold cavity 112 are sealed from ejector assembly 106. A coating of RTV compound or the equivalent is applied to the surface 132 of die member 108 that mates with a male die member (not shown) to seal the mold parting line as previously described for die 18.

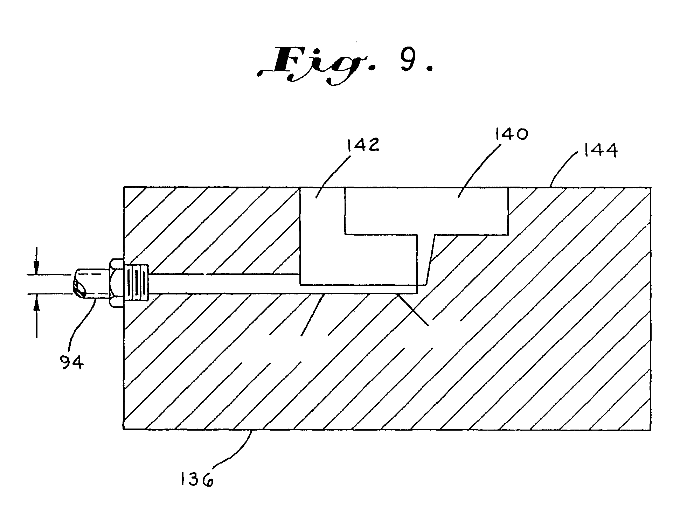

Fig. 9 shows a deep, thin-wall mold application comprising a female die 136 having a deep mold cavity 140 used in molding plastic parts having thin walls and deeply drawn sections. An insert 142 is applied to the single mold cavity 140. There is no ejector pin assembly in Fig. 9; the positive pressure applied to the mold (see Fig. 3) is sufficient to eject a molded part from cavity 140. As before, it is desirable to apply the previously discussed "O" ring sealing members or RTV compound to the surface 144 of female die 136 that mates with a male die (not shown) to achieve an adequate seal during the molding process.

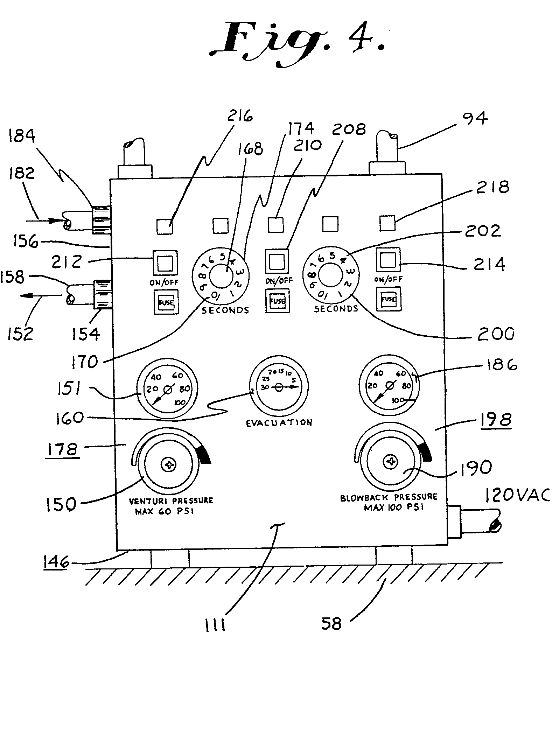

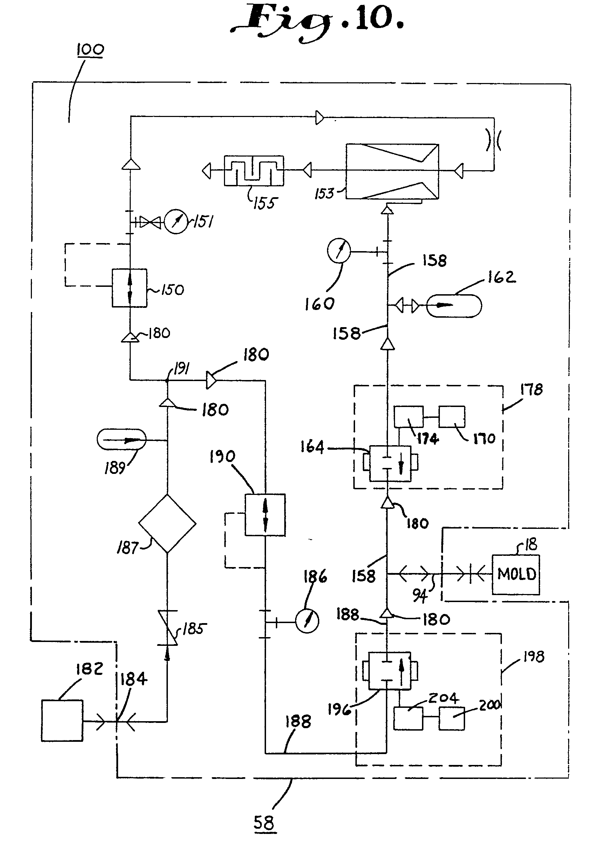

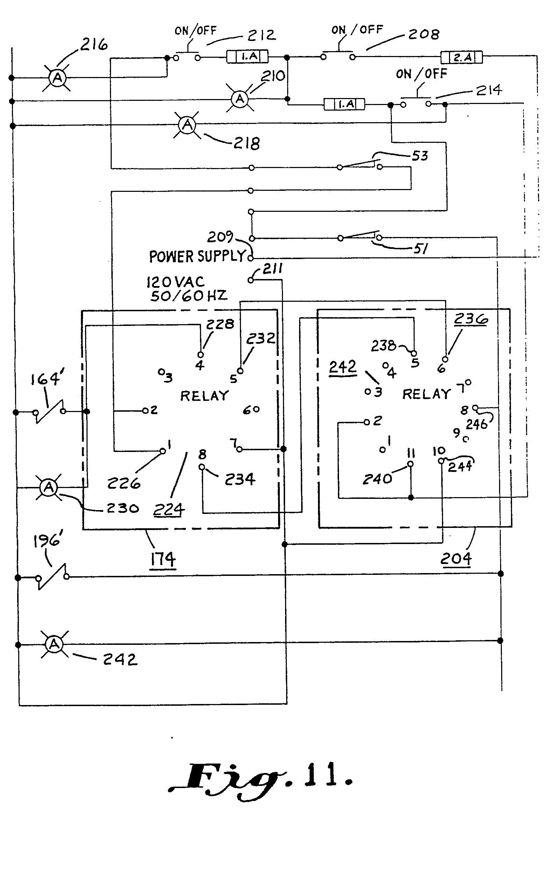

Fig. 4 affords an external view of the control apparatus 58 which constitutes the portable, programmable device for setting the time increments and air pressure levels discussed earlier herein. Control apparatus 58 comprises a small, convient, self-contained box 146 having a front panel 111 for mounting all of the control components, including gauges, wiring, tubing, switches and settable timing devices. Control apparatus 58 is set up by following a sequence of steps which parallel the operations defined in the accompanying description of the mold cycle. Pneumatic controls are shown schematically in Fig. 10 and electrical controls are similarly illustrated in Fig. 11.

The pneumatic control system 100 of Fig. 10 starts with an external air supply 182 which may be the compressed air source available in virtually any plastics manufacturing plant. Air supply 182 is located outside of control apparatus 58 and is connected through a pneumatic port 184 in wall 156 of box 146 (see Fig. 4). In apparatus 58, a line 188 extends from port 184 through a check valve 185 and a filter 187 to an accumulator 189 and to a junction 191, where line 183 is bifurcated. The direction of air flow, under pressure, is indicated by arrows 180.

The junction 191 in line 183 is connected to an adjustable pressure regulator 150 followed by a pressure gauge 151; from regulator 150 line 183 extends to the input of a Venturi pump 153 having its output connected to a muffler 155. Pump 153 has a second input from a vacuum supply line 158 that is connected to the vent path of one of the previously described molds such as mold 18, as indicated at 94. A vacuum gauge 160 is connected to the vacuum supply line 158, as is an accumulator 162. A gate valve 164 is interposed in the vacuum supply line between an accumulator 162 and vent connection 94. Valve 164 is a solenoid actuated valve activated by an electrical delay device 174 with a time delay scale 170 and an adjustment knob 168; see Figs. 4 and 10; Devices 164, 168, 170 and 174 are all part of a vacuum control 178.

Junction 191 in the line 183 is also connected through an adjustable pressure regulator 190 to a mold pressure supply line 188. A gate valve 196 is interposed in line 188 and a pressure gauge 186 is connected to the pressure supply line. Valve 196 is a solenoid actuated valve activated by an electrical delay device 204 with a time delay scale 200 and adjustment knob 202, Figs. 4 and 10. Devices 196, 200, 202 and 204 comprise a positive pressure control 198.

When the pneumatic system 100 shown in Fig. 10 is first set up for operation, pressure regulator 150 is adjusted to afford an appropriate operating pressure for the input to the Venturi pump 153. Typically, the maximum input pressure permitted for the Venturi pump is limited to 4.2 Kg/sq.cm. or less. Regulator 150 is accessible from the front of control 58 as shown in Fig. 4. Regulator 190 is also adjusted to provide a desired positive pressure in supply line 188; it is also accessible for that purpose as shown in Fig. 4. Typically, the positive pressure in line 188, Fig. 10, is below 7 Kg/sq.cm., though pressures up to 8.5 Kg/sq.cm. and even higher may be used.

At the beginning of each mold cycle, gate valve 164 in the vacuum supply line 158 is opened approximately at the time that the die 18 or other die closes (see Fig. 3). At this time, valve 196 is closed. The vacuum gate valve 164 remains open throughout the first interval $\triangle t_1$ in the mold cycle. At the end of the first time interval, vacuum supply valve 164 is closed and pressure supply valve 196 is opened. These actions need not occur simultaneously; there may be some delay after closing of valves 164 before valve 196 opens. Valve 196 is held open for the second time interval $\triangle t_2$ (Fig. 3) and usually closes approximately in coincidence with the initial opening of the molding die.

The electrical control illustrated in Fig. 11 has an AC power supply connected to two terminals 209 and 211; typically, this may be a 120 volt 50/60 Hz. power supply. The one side 209 of the power supply is connected through an appropriate fuse to a main on/off switch 208. The other side of switch 208 is connected through appropriate fuses to vacuum and pressure on/off switches 212 and 214. Switch 212 is connected through the die-closed limit switch 53 (see Fig. 2) to a relay 224 comprising the principal operating component of the electrical delay device 174 (Fig. 10). Switch 208 is also connected through the die-open limit switch 51 to a relay 242 comprising the principal operating element of the electrical delay device 204. Switch 214 is also connected to relay 240.

Relay 224 is a conventional timing relay of the "on delay" type. When energized through a circuit connection to its terminal 226, it starts a time delay cycle; the length of that time delay determines the first (vacuum) time interval ($\triangle t_1$ or $\triangle t'_1$) in the mold cycle, Fig. 3. At the end of its preset time delay, relay 224 actuates its operating contacts, opening those that are normally closed and vice versa. Relay 224 controls relay 242 by electrical connections between terminals 232 and 236 and between terminals 234 and 238.

Relay 242 is also a conventional timing relay, but of the "off delay" type. Power is supplied to relay 242 at all times when the control is in operation, through the circuit connections to its terminals 240 and 244. When an external control switch (here, contacts in relay 224) open, relay 242 starts a time delay cycle that determines the second (pressure) time interval ($\triangle t_2$ or $\triangle t'_2$, Fig. 3). When relay 242 times out it reverts to its original condition.

The solenoid 164' for vacuum gate valve 164 (Fig. 10) is electrically connected to power supply terminal 211 and to a contact 228 in relay 224; an indicator lamp 230 is connected in parallel with the solenoid. The solenoid 196' for pressure gate valve 196 is connected to power supply terminal 211 and to a terminal 246 of relay 236 and limit switch 53. An indicator lamp 242 is connected in parallel with solenoid 196'. Indicator lamps 210, 216, and 208 are provided for indicating the operating conditions of switches 208, 212, and 214, respectively; see Figs. 11 and 4.

In considering operation of the electrical control of Fig. 11, for convenience it may be assumed that the female die member, such as die member 46, Fig. 2, starts somewhere between its open and closed positions. The machine operator closes the main on/off switch 208 and also closes switches 212 and 214. The mold cycle begins with the molding die closing and limit switch 53 closes, completing an operating circuit for relay 224. Energization of relay 224 actuates the relay contacts to complete an energizing circuit to solenoid 164' through relay contact 228, opening vacuum gate valve 164 (Fig. 10). This initiates the first time interval of the mold cycle during which a negative pressure is applied to the mold cavity by the pneumatic system of Fig. 10. During this same time interval relay 236 is energized; because it is an off delay relay, however, it does not start timing out the second time interval.

When the first time interval preset into relay 224 has elapsed, the relay contacts revert to their original unactuated conditions. Consequently, solenoid 164' is deenergized, valve 164 reverts to its normal closed condition as shown in Fig. 10, and the negative pressure to the mold cavity is shut off. At the same time, the energizing circuit for relay 236 that is dependent upon relay 224 is interrupted and relay 236 begins to time out the second time interval preset into that relay. During this second time interval contacts in relay 236 provide an energizing circuit to solenoid 196', opening pressure gate valve 196 so that air under positive pressure is supplied to the mold cavity.

When the second time interval is complete, relay contacts 236 are again actuated, opening the energizing circuit to solenoid 196' so that gate valve 196 reverts to its normal closed condition and the positive pressure air supply to the mold cavity is shut off. When the molding die begins to open, switch 53 opens to deenergize relay 224. This resets relay 224 in vacuum timing control 174. Relay 242 of pressure timing control 204 resets at the end of its time delay interval and is ready for the next mold cycle. With the circuit illustrated in Fig. 11, closing of the die open limit switch 51 again energizes solenoid 196' to produce an additional flow of air under pressure into the mold cavity for cleaning purposes, due to the connection between switch 51 and solenoid 196'. This condition is brief; the molding die is fully open for only a short time. Throughout operation, the operator is provided with information regarding the status of control through the indicator lamps referred to above.

In all of the foregoing embodiments the vent pathway from line 94 (Figs. 2, and 5-9) extends only through the female die member. This arrangement is most frequently used. In some applications, however, it may be desirable to have the vent extend through the male die member or even through both die members, depending on the shape of the plastic molded parts.

The second time interval, for positive air pressure, should start before the molding die opens. Usually, it is preferable to conclude this time interval just as the mold starts to open. The positive pressure effects a uniform, incremental separation of the molded plastic parts from the die. As previously noted, an additional pressure application may be employed with the die fully open, when all molded parts are out of the way, to clear the vent pathway and other mold passages, particularly sprueways 106 (Fig 6).

In some instances it may be desirable to use an external vacuum pump instead of pump 153, Fig. 10. To that end, devices 150, 151, 153 and 155 may be omitted and a separate vacuum pump may be connected to vacuum line 158, Fig. 10, using an external vacuum line 152 connected to box 146 by an appropriate connector 154, Fig. 4.

## Claims

1. Apparatus for controlling operating pressure within a mold cavity in producing intricate and thin-walled plastic parts, in the molding die (18) of a cyclical injection molding machine (10), the molding die including mating male (50) and female (46) die members actuated reciprocally between closed (Fig. 7) and open (Fig. 5) conditions in a predetermined mold cycle (T, Fig. 3), with heated plastic material injected into at least one mold cavity (84; 112) formed between the die members when the die is closed and a molded part removed from the die cavity when the die is open, the apparatus comprising:

sealing means (90, 92) affording an airtight seal between the mating male and female die members when the molding die is closed;

a vent path (102, 104; 114, 118) extending through one die member (46; 108) into communication with the mold cavity;

vacuum pressure control means (178), connected to the vent path, for establishing and maintaining a substantially constant negative pressure in the mold cavity during a first time interval $(\Delta t_1)$ in each mold cycle (T) beginning after the molding die has closed and before the mold cavity is filled with plastic material;

positive pressure control means (198), connected to the vent path, for applying a positive air pressure to the mold cavity; and

reset means (51, 53) for resetting the vacuum pressure control means and the positive pressure control means following each second time interval;

characterized in that

the positive pressure control means (198) applies the positive air pressure to the mold cavity during a second time interval ($\triangle t_2$) in each mold cycle, beginning after the first time interval and ending before the molding die is completely open, to effect a uniform incremental separation of a molded part from the one die member.

2. Cyclic molding control apparatus according to Claim 1 in which each time interval has a duration in a range of 0.1 to ten seconds.

3. Cyclic molding control apparatus according to Claim 1 in which the negative pressure is within a range of 5 to 74 cm. Hg.

4. Cyclic molding control apparatus according to Claim 1 in which the positive pressure is within a range of 0.5 to 8.5 Kg/sq.cm.

5. Cyclic molding control apparatus according to Claim 1 in which the vacuum pressure control means comprises:

an adjustable vacuum source (150, 153), including an accumulator (162), connected to the vent path through a vacuum supply line (158);

an electrically actuated vacuum gate valve (164) interposed in the vacuum supply line; and

settable electrical time means (174), connected to the vacuum gate valve, for actuating the vacuum gate valve to open condition and maintaining the vacuum gate valve open for a first time interval determined by the setting of the timer means.

6. Cyclic molding control apparatus according to Claim 1 in which the positive pressure control means comprises:

an adjustable air pressure source (182, 187, 189, 190), connected to the vent path through a pressure supply line (188);

an electrically actuated pressure gate valve (196) interposed in the pressure supply line; and

settable electrical timer means (204), connected to the pressure gate valve, for actuating the pressure gate valve to open condition and maintaining the pressure gate valve open for a second time interval determined by the setting of the timer means.

7. Cyclic molding control apparatus according to Claim 1 in which the one die member is the female die member (46).

8. Cyclic molding control apparatus according to Claim 1 in which the vent path extends through both die members into communication with the mold cavity.

9. A method of controlling operating pressure within a mold cavity in producing intricate and thin-walled plastic parts in the molding die (18) of a cyclical injection molding machine (10), the molding die including mating male (50) and female (46) die members actuated reciprocally between closed (Fig. 7) and open (Fig. 5) conditions in a predetermined mold cycle (T, Fig. 3), with heated plastic material injected into at least one mold cavity (84; 112) formed between the die members when the die is closed and a molded part removed from the die cavity when the die is open, the method comprising the following steps:

A. affording a vent path (102, 104; 114, 118), through one die member (46; 108), in communication with the mold cavity;

B. sealing the mating male and female die members together in an airtight seal when the molding die is closed;

C. establishing and maintaining a substantially negative pressure in the mold cavity, through the vent path, during a first time interval ($\triangle t_1$) in each mold cycle (T) beginning after the molding die is closed and before the mold cavity is filled with plastic material;

characterized by the steps:

D. applying a positive air pressure to the mold cavity, through the vent path, during a second time interval ($\triangle t_2$) in each mold cycle, beginning after the first time interval and ending before the molding die is completely open, to effect a uniform incremental separation of a molded part from the one die member; and

E. repeating steps B, C and D in each mold cycle.

10. A control method according to Claim 9 in which the negative pressure is in a range of 5 to 74 cm.Hg and the positive pressure is in a range of 0.5 to 8.5 Kg/sq.cm.

11. A control method according to Claim 10 in which each time interval has a duration of 0.1 to 10 seconds.

12. A control method according to Claim 9 including the following step, repeated in each cycle:

D'. again applying a positive air pressure to the mold cavity, through the vent path, for a brief time interval when the molding die is fully open.

**Patentansprüche**

1. Einrichtung zum Steuern des Arbeitsdrucks in einem Gießhohlraum der Gußform (18) einer zyklisch arbeitenden Spritzgußmaschine (10) zur Herstellung kompliziert geformter und dünnwandiger Kunststoffteile, wobei die Gußform zusammenpassende Stempel- (50) und Matrizen- (46) Gußformbestandteile enthält, die in einem vorgegebenen Gußzyklus (T, Fig. 3) zwischen einem geschlossenen Zustand (Fig. 7) und einem geöffneten Zustand (Fig. 5) hin- und hergehend betätigt werden, und wobei erhitztes Kunststoffmaterial in mindestens einen zwischen den Gußformbestandteilen gebildeten Gießhohlraum (84; 112) eingespritzt wird, wenn die Gußform geschlossen ist, und ein gegossenes Teil aus dem Gießhohlraum entnommen wird, wenn die Gußform offen ist, enthaltend:

eine Dichteinrichtung (90, 92) zum Gewährleisten einer luftdichten Abdichtung zwischen den zusammenpassenden Stempel- und Matrizengußformbestandteilen, wenn die Gußform geschlossen ist,

einen Entlüftungspfad (102, 104; 114, 118), der sich mit dem Gießhohlraum kummunizierend durch ein Gußformbestandteil (46; 108) erstreckt;

eine Unterdrucksteuereinrichtung (178), die mit dem Entlüftungspfad verbunden ist, um während eines ersten Zeitintervalls ($t_1$) in jedem Gußzyklus (T) beginnend nach dem Schließen der Gußform und bevor der Gießhohlraum mit Kunststoffmaterial gefüllt ist, in dem Gießhohlraum einen im wesentlichen konstanten negativen Druck zu erzeugen und aufrechtzuerhalten;

eine Überdrucksteuereinrichtung (198), die mit dem Entlüftungspfad verbunden ist, um den Gießhohlraum mit einem positiven Luftdruck zu beaufschlagen; und

eine Rücksetzeinrichtung (51, 53) zum Zurücksetzen der Unterdrucksteuereinrichtung und der Überdrucksteuereinrichtung folgend auf jedes Zeitintervall;

dadurch gekennzeichnet,

daß die Überdrucksteuereinrichtung (198) den Gießhohlraum mit dem positiven Luftdruck beaufschlagt während eines zweiten Zeitintervalls ($\triangle t_2$) in jedem Gußzyklus, das nach dem ersten Zeitintervall beginnt und endet bevor die Gußform vollständig geöffnet ist, um eine gleichförmig zunehmende Trennung des gegossenen Teils von dem einen Gußformbestandteil zu bewirken.

2. Zyklisch arbeitende Gußsteuereinrichtung nach Anspruch 1, bei der jedes Zeitintervall eine Dauer im Bereich von 0,1 bis 10 Sekunden hat.

3. Zyklisch arbeitende Gußsteuereinrichtung nach Anspruch 1, bei der der negative Druck in einem Bereich von 5 bis 74 cm Quecksilbersäule liegt.

4. Zyklisch arbeitende Gußsteuereinrichtung nach Anspruch 1, bei der der positive Druck in einem Bereich von 0,5 bis 8,5 kg/cm² liegt.

5. Zyklisch arbeitende Gußsteuereinrichtung nach Anspruch 1, bei der die Unterdrucksteuereinrichtung enthält:

eine einstellbare Vakuumquelle (150, 153) mit einem Speicher (162), der mit dem Entlüftungspfad über eine Vakuumleitung (158) verbunden ist;

ein elektrisch betätigtes Vakuumabsperrventil (164), das in die Vakuumleitung geschaltet ist; und

eine einstellbare elektrische Zeitgebereinrichtung (174), die mit dem Vakuumabsperrventil gekoppelt ist, um das Vakuumabsperrventil in einen geöffneten Zustand zu bringen und während eines durch das Einstellen der Zeitgebereinrichtung bestimmten ersten Zeitintervalls geöffnet zu halten.

6. Zyklisch arbeitende Gußsteuereinrichtung nach Anspruch 1, bei der die Überdrucksteuereinrichtung enthält:

eine einstellbare Druckluftquelle (182, 187, 189, 190), die über eine Druckleitung (188) mit dem Entlüftungspfad verbunden ist;

ein elektrisch betätigtes Druckabsperrventil (196) das in die Druckleitung geschaltet ist; und

eine einstellbare elektrische Zeitgebereinrichtung (204), die mit dem Druckabsperrventil verbunden ist, um das Druckabsperrventil in einen geöffneten Zustand zu bringen und während eines durch das Einstellen der Zeitgebereinrichtung bestimmten zweiten Zeitintervalls geöffnet zu halten.

7. Zyklisch arbeitende Gußsteuereinrichtung nach Anspruch 1, bei der das eine Gußformbestandteil das Matrizengußformbestandteil (46) ist.

8. Zyklisch arbeitende Gußsteuereinrichtung nach Anspruch 1, bei der der Entlüftungspfad durch beide Gußformbestandteile in Kommunikation mit dem Gießhohlraum verläuft.

9. Verfahren zum Steuern des Arbeitsdruckes in einem Gießhohlraum einer Gußform (18) einer zyklisch arbeitenden Spritzgußmaschine (10) zur Herstellung kompliziert geformter und dünnwandiger Kunststoffteile, wobei die Gußform zusammenpassende Stempel- (50) und Matrizen- (46) Gußformbestandteile enthält, die in einem vorgegebenen Gußzyklus (T, Fig. 3) zwischen einem geschlossenen (Fig. 7) Zustand und einem geöffneten (Fig. 5) Zustand hin- und hergehend betätigt werden, und wobei erhitztes Kunststoffmaterial in mindestens einem zwischen den Gußformbestandteilen gebildeten Gießhohlraum (84; 112) eingespritzt wird, wenn die Gußform geschlossen ist, und ein gegossenes Teil aus dem Gießhohlraum entnommen wird, wenn die Gußform geöffnet ist, enthaltend folgende Schritte:

A) Bilden eines Entlüftungspfades (102, 104; 114, 118) durch ein Gußformbestandteil (46; 108), der mit dem Gießhohlraum in Kommunikaion steht;

B) Abdichten der zusammenpassenden Stempel- und Matrizengußformbestandteile zusammen in luftdichter Abdichtung, wenn die Gußform geschlossen ist;

C) Erzeugen und Aufrechterhalten eines im wesentlichen negativen Drucks in dem Gießhohlraum über den Entlüftungspfad während eines ersten Zeitintervalls ($\triangle t_1$) in jedem Gußzyklus (T), das beginnt, nachdem die Gußform geschlossen ist und bevor der Gießhohlraum mit Kunststoffmaterial gefüllt ist; gekennzeichnet durch die Verfahrensschritte:

D) Zuführen eines positiven Luftdrucks über den Entlüftungspfad zu dem Gießhohlraum während eines zweiten Zeitintervalls ($\triangle t_2$) in jedem Gußzyklus, das nach dem ersten Zeitintervall beginnt und endet bevor die Gußform vollständig geöffnet ist, um eine gleichmäßige zunehmende Trennung des gegossenen Teils von dem einen Gußformbestandteil zu bewirken; und

E) Wiederholung der Schritte B), C) und D) in jedem Gußzyklus.

10. Steuerverfahren nach Anspruch 9, bei dem der negative Druck in einem Bereich von 5 bis 74 cm Quecksilbersäule und der positive Druck in einem Bereich von 0,5 bis 8,5 kg/cm² liegt.

11. Steuerverfahren nach Anspruch 10, bei dem jedes Zeitintervall eine Dauer von 0,1 bis 10 Sekunden hat.

12. Steuerverfahren nach Anspruch 9, mit dem in jedem Zyklus wiederholten folgenden Schritt:

D') nochmaliges Zuführen eines positiven Luftdrucks über den Entlüftungspfad zu dem Gießhohlraum für ein kurzes Zeitintervall, wenn die Gußform vollständig geöffnet ist.

**Revendications**

1. Dispositif pour commander la pression opérationnelle dans la cavité de moulage, destinée à produire des pièces en matière synthétique de forme compliquée et à parois minces, de la matrice de moulage (18) d'une machine à mouler par injection cyclique (10), la matrice de moulage comprenant des éléments de matrice mâle (50) et femelle (46) adaptés l'un à l'autre et actionnés en va-et-vient entre des positions fermée (figure 7) et ouverte (figure 5) au cours d'un cycle de moulage prédéterminé (T, figure 3), une matière plastique chauffée étant injectée dans au moins une cavité de moulage (84; 112) constituée entre les éléments de matrice quand cette matrice est fermée, et une pièce moulée étant retirée de la cavité de la matrice quand cette matrice est ouverte, le dispositif comprenant:

des moyens de fermeture étanche (90, 92) déterminant un joint étanche à l'air entre les éléments mâle et femelle correspondants de la matrice quand la matrice de moulage est fermée;

un passage d'évent (102, 104; 114, 118) s'étendant à travers un élément de matrice (46; 108) et étant en communication avec la cavité de moulage;

des moyens de commande de dépression (178) reliés au passage d'évent pour établir et maintenir une pression négative sensiblement constante dans la cavité de moulage pendant un premier intervalle de temps $(\triangle t_1)$ au cours de chaque cycle de moulage (T) commençant après que la matrice de moulage a été fermée et avant que la cavité de moulage a été remplie de matière plastique;

des moyens de commande de pression positive (198) reliés au passage d'évent pour appliquer une pression d'air positive à la cavité de moulage; et

des moyens de remise à l'état initial (51, 53) pour remettre à l'état initial les moyens de commande de dépression et les moyens de commande de pression positive à la suite de chaque second intervalle de temps;

caractérisé en ce que

les moyens de commande de pression positive (198) appliquent la pression positive de l'air à la cavité de moulage pendant un second intervalle de temps $(\triangle t_2)$ pendant chaque cycle de moulage, commençant après le premier intervalle de temps et se terminant avant que la matrice de moulage soit complètement ouverte, pour déterminer une séparation incrémentale uniforme d'une pièce moulée de l'élément de matrice.

2. Dispositif de commande de moulage cyclique selon la revendication 1, dans lequel chaque intervalle de temps a une durée comprise entre 0,1 et 10 secondes.

3. Dispositif de commande de moulage cyclique selon la revendication 1, dans lequel la pression négative est comprise entre 5 et 74 cm. Hg.

4. Dispositif de commande de moulage cyclique selon la revendication 1, dans lequel la pression positive est comprise entre 0,5 et 8,5 kg/cm².

5. Dispositif de commande de moulage cyclique selon la revendication 1, dans lequel les moyens de commande de dépression comprennent:

une source de vide réglable (150, 153), comprenant un accumulateur (162), reliée au passage d'évent par l'intermédiaire d'une ligne d'alimentation de dépression (158);

une valve d'arrêt de dépression (164) actionnée électriquement interposée dans la ligne d'alimentation de dépression; et

des moyens à minuterie électrique réglables (174) reliés à la valve d'arrêt de dépression pour actionner la valve d'arrêt de dépression vers la position ouverte et maintenir la valve d'arrêt de dépression ouverte pendant un premier intervalle de temps déterminé par le réglage des moyens à minuterie.

6. Dispositif de commande de moulage cyclique selon la revendication 1, dans lequel les moyens de commande de pression positive comprennent:

une source d'air sous pression réglable (182, 187, 189, 190) reliée au passage d'évent par l'intermédiaire d'une ligne d'alimentation de pression (188);

une valve d'arrêt de pression (196) actionnée électriquement montée dans la ligne d'alimentation de pression; et

des moyens à minuterie électrique réglables (204) reliés à la valve d'arrêt de pression pour actionner la valve d'arrêt de pression vers la position ouverte et maintenir la valve d'arrêt de pression ouverte pendant un second intervalle de temps déterminé par le réglage des moyens à minuterie.

7. Dispositif de commande de moulage cyclique selon la revendication 1, dans lequel un élément de la matrice est l'élément de matrice femelle (46).

8. Dispositif de commande de moulage cyclique selon la revendication 1, dans lequel le passage d'évent s'étend à travers les deux éléments de matrice, en communication avec la cavité de moulage.

9. Procédé pour commander la pression opérationnelle dans la cavité de moulage, destinée à produir des pièces en matière synthétique de forme compliquée et à parois minces, de la matrice de moulage (18) d'une machine à mouler par injection cyclique (10), la matrice de moulage comprenant des éléments de matrice mâle (50) et femelle (46) adaptés l'un à l'autre et actionnés en va-et-vient entre des positions fermée (figure 7) et ouverte (figure 5) au cours d'un cycle de moulage prédéterminé (T, figure 3), une matière plastique chauffée étant injectée dans au moins une cavité de moulage (84; 112) constituée entre les éléments de matrice quand cette matrice est fermée, et une pièce moulée étant retirée de la cavité de la matrice quand cette matrice est ouverte, le procédé comprenant les étapes suivantes:

A. constituer un passage d'évent (102, 104; 114, 118) s'étendant à travers un élément de matrice (46; 108), en étant en communication avec la cavité de moulage;

B. fermer de façon étanche les éléments de matrice mâle et femelle correspondants l'un sur l'autre par un joint étanche à l'air quand la matrice de moulage est fermée;

C. établir et maintenir une pression sensiblement négative dans la cavité de moulage, par le passage d'évent, pendant un premier intervalle de temps ($\triangle t_1$) au cours de chaque cycle de moulage (T) commençant après que la matrice de moulage a été fermée et avant que la cavité de moulage a été remplie de matière plastique;

caractérisé par les étapes consistant à:

D. appliquer une pression d'air positive à la cavité de moulage, par le passage d'évent, pendant un second intervalle de temps ($\triangle t_2$) pendant chaque cycle de moulage, commençant après le premier intervalle de temps et se terminant avant que la matrice de moulage est complètement ouverte, pour déterminer une séparation incrémentale uniforme d'une pièce moulée d'un élément de matrice; et

E. répéter les étapes B, C et D de chaque cycle de moulage.

10. Procédé de commande selon la revendication 9, dans lequel la pression négative est comprise entre 5 et 74 cm. Hg et la pression positive est comprise entre 0,5 et 8,5 kg/cm$^2$.

11. Procédé de commande selon la revendication 10, dans lequel chaque intervalle de temps a une durée de 0,1 à 10 secondes.

12. Procédé de commande selon la revendication 9, comprenant l'étape suivante, répétée pour chaque cycle:

D'. appliquer à nouveau une pression d'air positive dans la cavité de moulage, par le passage d'évent, pendant un bref intervalle de temps quand la matrice de moulage est totalement ouverte.

*Fig.1.*

Fig. 2.

*Fig. 3.*

MOLD OPENS

18

46 — 18 — 52

18 — 50

180

MOLD CLOSES

46
50
18

MATERIAL INJECTED   0.5 - 8.5 KG/CM²

POSITIVE PRESSURE

ATMOSHERIC PRESSURE

NEGATIVE PRESSURE (5 - 74 CM. HG)

40

$T_0$

$\triangle t_1$   $\triangle t_2$

$\triangle t'_1$   $\triangle t'_2$

MOLD CYCLE TIME   T

VACUUM GATE VALVE 164 —   //// OPEN ////   CLOSED ////

PRESSURE GATE VALVE 196   //// CLOSED ////   OPEN

EP 0 184 211 B1

# Fig. 4.

VENTURI PRESSURE MAX 60 PSI

BLOWBACK PRESSURE MAX 100 PSI

EVACUATION

SECONDS

SECONDS

ON/OFF

FUSE

120VAC

*Fig. 6.*

*Fig. 5.*

Fig. 7.

Fig. 8.

Fig. 9.

# Fig.10.

Fig. 11.